# EUROPÄISCHE PATENTSCHRIFT

(11) **EP 4 558 334 B1**
(45) Veröffentlichungstag und Bekanntmachung des Hinweises auf die Patenterteilung: **24.12.2025**
(21) Anmeldenummer: 23735307.3
(22) Anmeldetag: 27.06.2023
(51) Int. Cl.: B32B 17/10, C03C 17/34, B60J 1/02, B60K 35/00, G02B 27/01

(54) **VERBUNDSCHEIBE MIT MEHREREN REFLEXIONSBEREICHEN**
LAMINATED GLASS WITH MULTIPLE REFLECTIVE AREAS
VITRE COMPOSITE POURVUE D'UNE PLURALITÉ DE ZONES RÉFLÉCHISSANTES

(30) Priorität: 19.07.2022 EP 22185693
(43) Veröffentlichungstag der Anmeldung: 28.05.2025
(73) Patentinhaber: Saint-Gobain Sekurit France, 60150 Thourotte (FR)
(72) Erfinder: ARENDT, Sebastian, 52134 Herzogenrath (DE); HAGEN, Jan, 52134 Herzogenrath (DE); MOTEMANI SHARABIANI, Yahya, 52134 Herzogenrath (DE); JANZYK, Sebastian, 52134 Herzogenrath (DE); GOMER, Andreas, 52134 Herzogenrath (DE)
(74) Vertreter: Feist, Florian Arno
(86) Internationale Anmeldenummer: PCT/EP2023/067370
(87) Internationale Veröffentlichungsnummer: WO 2024/017576

(56) Entgegenhaltungen:
- WO-A1-2021/213884
- WO-A1-2022/073894

## Beschreibung

Die Erfindung betrifft eine Verbundscheibe für eine Projektionsanordnung, ein Verfahren zu deren Herstellung, deren Verwendung und eine Projektionsanordnung mit der Verbundscheibe.

Moderne Automobile werden in zunehmendem Maße mit sogenannten Head-Up-Displays (HUDs) ausgestattet. Mit einem Projektor, typischerweise im Bereich des Armaturenbretts, werden Bilder auf den Durchsichtbereich der Windschutzscheibe projiziert, dort reflektiert und vom Fahrer als virtuelles Bild (von ihm aus gesehen) hinter der Windschutzscheibe wahrgenommen. So können wichtige Informationen in das Blickfeld des Fahrers projiziert werden, beispielsweise die aktuelle Fahrtgeschwindigkeit, Navigations- oder Warnhinweise, die der Fahrer wahrnehmen kann, ohne seinen Blick von der Fahrbahn wenden zu müssen. Head-Up-Displays können so wesentlich zur Steigerung der Verkehrssicherheit beitragen.

Es ist ebenso bekannt, die Windschutzscheibe mit einer Reflexionsschicht auszustatten, welche zwar die Durchsicht erlaubt, aber die Projektorstrahlung dennoch in einem signifikanten Maße reflektiert. Der Einfallswinkel der Projektorstrahlung auf die Windschutzscheibe beträgt typischerweise etwa 65°, was nahe dem Brewster-Winkel für einen Luft-Glas-Übergang liegt (56,5° für Kalk-Natron-Glas). Wird der Projektor mit s-polarisierter Strahlung betrieben, so wird diese an den externen Oberflächen der Windschutzscheibe reflektiert. Eine zusätzliche Reflexionsschicht kann in diesem Fall dazu verwendet werden, die Intensität des Anzeigebildes zu verstärken. Wird der Projektor mit p-polarisierter Strahlung betrieben, so wird diese an den Scheibenoberflächen nicht wesentlich reflektiert. In diesem Fall ist eine Reflexionsschicht zwingend erforderlich, um das HUD zu realisieren. Als Reflexionsschicht kann beispielsweise eine Beschichtung mit mindestens einer metallischen Schicht, insbesondere Silberschicht, verwendet werden. Die Windschutzscheibe besteht typischerweise aus einer Außenscheibe und einer Innenscheibe, die über eine thermoplastische Zwischenschicht miteinander verbunden sind. Die besagte Beschichtung kann beispielsweise auf der zur Zwischenschicht hingewandten Oberfläche der Außenscheibe oder der Innenscheibe aufgebracht werden oder auf einer PET-Trägerfolie, die in die Zwischenschicht eingelagert ist. HUDs mit p-polarisierter Strahlung mit Reflexionsschichten sind beispielsweise aus DE102014220189A1, WO2019046157A1 und US2017242247A1 bekannt. Es sind aber auch rein dielektrische Reflexionsfolien bekannt, die aus einer Mehrzahl von Einzelschichten mit alternierend hohem und niedrigem Brechungsindex ausgebildet sind, wobei die reflektierende Wirkung durch optische Interferenz erzeugt wird. Auch solche Folien können in die Zwischenschicht eingelagert werden. Eine Verbundscheibe mit einer solchen Funktionsfolie ist beispielsweise aus WO03099553A1 bekannt.

Windschutzscheiben weisen außer dem transparenten Durchsichtbereich üblicherweise einen opaken Maskierungsbereich mit einer opaken Schicht auf, durch den keine Durchsicht möglich ist. Der Maskierungsbereich ist typischerweise in einem umlaufenden Randbereich der Windschutzscheibe angeordnet und umrandet den Durchsichtbereich. Der opake Maskierungsbereich dient in erster Linie dazu, den zur Verklebung der Windschutzscheibe mit der Fahrzeugkarosserie verwendeten Klebstoff vor UV-Strahlung zu schützen. Der Maskierungsbereich wird typischerweise durch einen schwarzen Abdeckdruck auf der zur Zwischenschicht hingewandten Oberfläche der Außenscheibe ausgebildet.

Es ist möglich, auch im Maskierungsbereich ein virtuelles Bild zu erzeugen. Es wird also auch der Maskierungsbereich durch einen Projektor bestrahlt, und das Licht dort reflektiert, wodurch eine Anzeige für den Fahrer erzeugt wird. So können beispielsweise Informationen, die bislang im Bereich des Armaturenbretts angezeigt wurden, wie die Uhrzeit, Fahrtgeschwindigkeit, Motordrehzahl oder Angaben eines Navigationssystems, oder auch das Bild einer rückwärts gerichteten Kamera, welches die klassischen Außenspiegel oder Rückspiegel ersetzt, auf praktische und ästhetisch ansprechende Weise direkt auf der Windschutzscheibe dargestellt werden, beispielsweise in dem Abschnitt des Maskierungsbereichs, der an die Unterkante der Windschutzscheibe grenzt. Eine Projektionsanordnung dieser Art ist beispielsweise aus DE102009020824A1 bekannt. Eine homogene Reflexion von Licht im Maskierungsbereich stellt andere Anforderungen an den Aufbau einer Verbundscheibe als jene bei einer HUD-Reflexion.

Die WO2021/213884A1 offenbart eine Projektionsanordnung mit mindestens zwei Reflexionsbereichen in einer Windschutzscheibe, wobei die Art der Lichtreflexion in den Reflexionsbereichen auf unterschiedliche Weise ausgestaltet ist. Die WO2022/073894A1 offenbart eine Fahrzeugscheibe für eine Projektionsanordnung, wobei die Reflexionsschicht fahrzeuginnenraumseitig vor einem Maskierungsstreifen angeordnet ist.

Die Aufgabe der vorliegenden Erfindung besteht daher darin, eine Verbundscheibe für Projektionsanordnungen bereitzustellen, welche sowohl als Bestandteil einer klassischen HUD-Projektionsanordnung verwendet werden kann als auch einer Projektionsanordnung mit einem Maskierungsbereich, wobei für beide Arten von Projektionsanordnungen eine homogene Reflexion erzielt wird.

Die Aufgabe der vorliegenden Erfindung wird erfindungsgemäß durch eine Verbundscheibe nach Anspruch 1 gelöst. Bevorzugte Ausführungsformen gehen aus den Unteransprüchen hervor.

Die Erfindung betrifft eine Verbundscheibe für eine Projektionsanordnung, umfassend eine Außenscheibe, eine thermoplastische Zwischenschicht, eine Innenscheibe, eine teilweise transparente Reflexionsschicht und eine opake Reflexionsschicht. Die thermoplastische Zwischenschicht ist zwischen der Außenscheibe und der Innenscheibe angeordnet. Die teilweise transparente Reflexionsschicht und die opake Reflexionsschicht sind zwischen der Außenscheibe und der Innenscheibe angeordnet. Die opake Reflexionsschicht ist außerhalb eines Durchsichtbereich der Verbundscheibe angeordnet. Die teilweise transparente Reflexionsschicht erstreckt sich über mindestens den gesamten Durchsichtbereich der Verbundscheibe.

Mit dem Durchsichtbereich der Verbundscheibe ist der Bereich der Verbundscheibe gemeint, welcher zur Durchsicht vorgesehen ist. Der Durchsichtbereich ist also frei von opaken Schichten und ist zumindest teilweise transparent mit einem Lichttransmissionsgrad von mindestens 50 %, vorzugsweise mindestens 70 %. Ist die Verbundscheibe beispielsweise eine Windschutzscheibe so ist der Durchsichtbereich jener Bereich, durch welchen ein Betrachter auf die Straße schauen kann.

Die opake Reflexionsschicht reflektiert sichtbares Licht zu mindestens 30 % und die teilweise transparente Reflexionsschicht reflektiert sichtbares Licht zu maximal 30 %. Mit "reflektiert" ist im Sinne der Erfindung gemeint, dass die opake oder die teilweise transparente Reflexionsschicht sichtbares Licht reflektieren, welches auf sie auftrifft. Die Reflexion in einem bestimmten Prozentbereich bedeutet im Sinne der Erfindung einen gemittelten Reflexionsgrad bei einem definierten Einfallswinkel von 65°. Die opaken Reflexionsschicht ist insbesondere dazu vorgesehen, ein von einem Projektor auf die Reflexionsschicht projiziertes Bild zu reflektieren.

Die opake und die teilweise transparente Reflexionsschicht sind geeignet ausgebildet, um sichtbares Licht, in einem Wellenlängenbereich von 380 nm bis 780 nm, zu reflektieren. Die opake und die teilweise transparente Reflexionsschicht reflektieren vorzugsweise p-polarisiertes und s-polarisiertes Licht zu gleichen Anteilen, sie können aber auch p-polarisiertes Licht und s-polarisiertes Licht unterschiedlich stark reflektieren. Die opake Reflexionsschicht und die teilweise transparente Reflexionsschicht weisen vorzugsweise einen hohen und gleichmäßigen Reflexionsgrad (über verschiedene Einstrahlwinkel) gegenüber p-polarisierter und/oder s-polarisierter Strahlung auf, sodass eine intensitätsstarke und farbneutrale Bild-Darstellung gewährleistet ist. Bei der Reflexion von p-polarisiertem Licht treten weniger Geisterbilder auf und damit wird eine verbesserte visuelle Qualität des reflektierten Lichtes (beispielsweise virtuelles Bild) erzielt. Durch Beimischung von s-polarisiertem Licht kann der Reflexionsgrad erhöht werden.

Die Verbundscheibe kann Bestandteil einer Projektionsanordnung sein, wobei die teilweise transparente Reflexionsschicht mit einem Projektor bestrahlt werden kann und die opake Reflexionsschicht mit einem weiteren Projektor bestrahlt werden kann. Der Projektor und der weitere Projektor projizieren hierbei vorzugsweise ein virtuelles Bild auf die jeweilige Reflexionsschicht. Durch die unterschiedlichen Reflexionseigenschaften kann ein homogenes Bild sowohl im Durchsichtbereich auf der teilweise transparenten Reflexionsschicht als auch außerhalb des Durchsichtbereich auf der opaken Reflexionsschicht erzielt werden. Dies ist ein großer Vorteil der Erfindung. Der Projektor ist ein HUD-Projektor, wohingegen der weitere Projektor ein HUD-Projektor sein kann; er kann jedoch auch weniger energieintensiv als übliche HUD-Projektoren sein, da aufgrund der Opazität der opaken Reflexionsschicht das virtuelle Bild auch bei geringeren Lichtintensitäten des Projektors visuell gut wahrnehmbar ist.

Die Außenscheibe weist eine von der thermoplastischen Zwischenschicht abgewandte außenseitige Oberfläche auf, welche auch gleichzeitig die Außenfläche der Verbundscheibe ist. Die Außenscheibe weist außerdem eine der thermoplastischen Zwischenschicht zugewandte innenraumseitige Oberfläche auf. Die innenraumseitige Oberfläche der Innenscheibe ist zugleich die Innenfläche der Verbundscheibe. Die Innenscheibe weist zudem eine der thermoplastischen Zwischenschicht zugewandte außenseitige Oberfläche auf. Die Verbundscheibe ist dafür vorgesehen, eine äußere Umgebung von einem Innenraum, vorzugsweise einen Fahrzeuginnenraum, abzutrennen. Die außenseitige Oberfläche der Außenscheibe ist dabei dafür vorgesehen, der äußeren Umgebung zugewandt zu sein und die innenraumseitige Oberfläche der Innenscheibe ist dafür vorgesehen, dem Innenraum zugewandt zu sein.

Die Verbundscheibe weist eine umlaufende Kante auf, welche besonders bevorzugt eine Oberkante und eine Unterkante sowie zwei dazwischen verlaufende Seitenkanten mit einer linken und einer rechten Seitenkante umfasst. Mit Oberkante wird diejenige Kante bezeichnet, welche dafür vorgesehen ist, in Einbaulage nach oben zu weisen. Mit Unterkante wird diejenige Kante bezeichnet, welche dafür vorgesehen ist, in Einbaulage nach unten zu weisen. Die Oberkante wird häufig auch als Dachkante und die Unterkante als Motorkante bezeichnet. Die Verbundscheibe kann jede beliebige geeignete geometrische Form und/oder Krümmung aufweisen. Die Angaben "linke" und "rechte" beziehen sich auf die Seitenangabe bzw. Richtungsangabe für einen Betrachter, der auf die eingebaute erfindungsgemäße Verbundscheibe aus einem Innenraum blickt.

In einer besonders bevorzugten Ausführungsform der Erfindung ist die opake Reflexionsschicht in Durchsicht durch die Verbundscheibe vor einer Maskierungsschicht angeordnet. Die opake Reflexionsschicht ist also in Durchsicht durch die Verbundscheibe blickend in Richtung von der Innenscheibe zur Außenscheibe vor einer opaken Maskierungsschicht angeordnet. Andersherum überdeckt die Maskierungsschicht in Durchsicht durch die Verbundscheibe blickend in Richtung von der Außenscheibe zur Innenscheibe die gesamte opake Reflexionsschicht. Die Maskierungsschicht kann kongruent also deckungsgleich zur opaken Reflexionsschicht angeordnet oder die opake Reflexionsschicht vollständig verdecken und sich darrüberhinaus über die Fläche der Verbundscheibe erstrecken. Mit in Richtung von der Innenscheibe zur Außenscheibe oder von der Außenscheibe zur Innenscheibe blickend ist eine senkrecht zur Hauptfläche der Verbundscheibe angeordnete Blickrichtung gemeint. Im Sinne der Erfindung bedeutet die "vollständige Verdeckung eines Elements A mit einem Element B", dass die orthonormale Projektion von Element A zur Ebene von Element B vollständig innerhalb von Element B angeordnet ist.

Die Maskierungsschicht kann eine opake Emaille sein oder eine opake thermoplastische Folie sein. Die Maskierungsschicht kann auch eine bereichsweise opake thermoplastische Folie und somit Bestandteil der thermoplastischen Zwischenschicht sein. Die Maskierungsschicht ist insbesondere eine dunkle, bevorzugt schwarze, Emaille, welche auf der Außenscheibe aufgebracht ist. Die Maskierungsschicht ist vorzugsweise auf der innenraumseitigen Oberfläche der Außenscheibe aufgebracht. Die Maskierungsschicht ist bevorzugt eine periphere (rahmenförmige) Schicht, welche sich entlang der umlaufenden Kante der Verbundscheibe erstreckt und im Bereich der opaken Reflexionsschicht verbreitert sein kann. Die Maskierungsschicht dient in erster Linie als UV-Schutz für den Montagekleber der Verbundscheibe (Beispielsweise zum Einkleben in ein Fahrzeug). Die Maskierungsschicht weist vorzugsweise einen Transmissionsgrad (nach ISO 9050:2003) für sichtbares Licht von kleiner 15 %, bevorzugt kleiner 10 %, besonders bevorzugt kleiner 1 % auf. Die Maskierungsschicht kann zumindest abschnittsweise auch semitransparent, beispielsweise als Punktraster, Streifenraster oder kariertes Raster ausgebildet sein. Alternativ kann die Maskierungsschicht auch einen Gradienten aufweisen, beispielsweise von einer opaken Bedeckung zu einer semitransparenten Bedeckung.

Die Verbundscheibe kann auch mehrere, vorzugsweise zwei, Maskierungsschichten aufweisen, wobei vorzugsweise eine erste Maskierungsschicht auf der innenraumseitigen Oberfläche der Außenscheibe aufgebracht ist und eine zweite Maskierungsschicht auf der innenraumseitigen Oberfläche der Innenscheibe aufgebracht ist.

In einer besonders bevorzugten Ausführungsform der Erfindung ist die Maskierungsschicht im umlaufenden Randbereich der Verbundscheibe rahmenförmig angeordnet und in einem zur Unterkante der Verbundscheibe benachbarten Abschnitt des umlaufenden Randbereichs verbreitert. Die Maskierungsschicht weist vorzugsweise im verbreiterten Bereich eine Breite von 10 cm oder mehr, besonders bevorzugt 20 cm oder mehr, insbesondere 30 cm oder mehr auf. Diese Ausführungsform eignet sich vor allem für die Verwendung in Fahrzeugen, in dem die Projektionsanordnung als Alternative zu im Armaturenbrett verbauten Displays verwendet werden kann.

Die teilweise transparente Reflexionsschicht weist einen Lichttransmissionsgrad (nach ISO 9050:2003) für Licht im sichtbaren Spektralbereich von mindestens 50 %, bevorzugt mindestens 60 % und besonders bevorzugt mindestens 70 % auf. Weiterhin weist die teilweise transparente Reflexionsschicht einen Lichttransmissionsgrad (nach ISO 9050:2003) für Licht im sichtbaren Spektralbereich von 90 % oder kleiner, bevorzugt 80 % oder kleiner, besonders bevorzugt genau 70 % auf. "Opak" bedeutet im Sinne der Erfindung eine Lichttransmission, also Lichttransmissionsgrad (nach ISO 9050:2003), von weniger als 30 %, bevorzugt weniger als 20 %, besonders bevorzugt weniger als 5 % und insbesondere weniger 0,1 %. "Teilweise transparent" bedeutet im Sinne der Erfindung eine Lichttransmission von mindestens 50 %, bevorzugt mindestens 60 % und besonders bevorzugt mindestens 70 %.

Die teilweise transparente Reflexionsschicht erstreckt sich vorzugsweise über mehr als 50 %, bevorzugt mehr als 70 %, besonders bevorzugt mehr als 90 %, der Fläche der Verbundscheibe. Die teilweise transparente Reflexionsschicht erstreckt sich erfindungsgemäß zumindest über den gesamten Bereich, welcher zur Durchsicht durch die Verbundscheibe vorgesehen ist. Damit ist der Bereich gemeint, durch welchen in der fertiggestellten Verbundscheibe und gegebenenfalls im eingebauten Zustand (beispielsweise Einbau der Verbundscheibe in Fahrzeug) hindurchgeblickt werden kann und der zumindest teilweise transparent ist. Insbesondere erstreckt sich die teilweise transparente Reflexionsschicht über die gesamte Fläche der Verbundscheibe abzüglich eines umlaufenden, rahmenförmigen Randbereiches (benachbart zur umlaufenden Kante der Verbundscheibe). Der unbeschichtete umlaufende, rahmenförmige Randbereich dient der besseren Abtrennung der teilweise transparenten Reflexionsschicht von der äußeren Umgebung. Die teilweise transparente Reflexionsschicht ist hierdurch besser vor Korrosion oder mechanischer Beschädigung geschützt. Der beschichtungsfreie Randbereich weist bevorzugt eine Breite von kleiner 20 cm, besonders bevorzugt kleiner 10 cm, insbesondere kleiner 1 cm, auf. Mit "Breite" ist im Sinne der Erfindung die Ausdehnung senkrecht zur Erstreckungsrichtung gemeint.

Die opake Reflexionsschicht erstreckt sich vorzugsweise maximal über 50 %, bevorzugt maximal über 40 %, besonders bevorzugt maximal über 20 %, der Fläche der Verbundscheibe. Besonders bevorzugt ist die opake Reflexionsschicht benachbart zur Oberkante, linker Seitenkante, rechter Seitenkante und/oder der Unterkante der Verbundscheibe angeordnet, wobei sich vorzugsweise ein beschichtungsfreier Randbereich zwischen der opaken Reflexionsschicht und der Oberkante, Seitenkante und/oder Unterkante erstreckt. Der beschichtungsfreie Randbereich weist bevorzugt eine Breite von kleiner 20 cm, besonders bevorzugt kleiner 10 cm, insbesondere kleiner 1 cm, auf. Die opake Reflexionsschicht erstreckt sich bevorzugt streifenförmig von der einen (linken) Seitenkante zur anderen (rechten) Seitenkante. Die opake Reflexionsschicht weist bevorzugt eine Breite von mindestens 10 cm, besonders bevorzugt mindestens 20 cm, insbesondere mindestens 30 cm, auf. Die Anordnung der opaken Reflexionsschicht in einem Randbereich benachbart zur Unterkante, linker Seitenkante, rechter Seitenkante und/oder Oberkante bietet sich insbesondere dann an, wenn die Verbundscheibe in der Form einer Fahrzeugscheibe, insbesondere Windschutzscheibe, ausgebildet ist.

Die teilweise transparente Reflexionsschicht enthält typischerweise eine oder mehrere, beispielsweise zwei, drei oder vier funktionelle Schichten. Die funktionellen Schichten enthalten bevorzugt zumindest ein Metall, beispielsweise Silber, Gold, Kupfer, Nickel und/oder Chrom oder eine Metalllegierung. Die funktionellen Schichten enthalten besonders bevorzugt mindestens 90 Gew. % des Metalls, insbesondere mindestens 99,9 Gew. % des Metalls. Die funktionellen Schichten können aus dem Metall oder der Metalllegierung bestehen. Die funktionellen Schichten enthalten besonders bevorzugt Silber oder eine silberhaltige Legierung. Ganz besonders bevorzugt enthält die teilweise transparente Reflexionsschicht höchstens 2 Silberschichten, insbesondere höchstens eine Silberschicht, oder besteht höchstens aus 2 Silberschichten, insbesondere höchstens aus einer Silberschicht. Solche funktionellen Schichten weisen eine besonders vorteilhafte elektrische Leitfähigkeit bei gleichzeitiger hoher Transmission im sichtbaren Spektralbereich auf. Die Dicke einer funktionellen Schicht beträgt bevorzugt von 5 nm bis 50 nm, besonders bevorzugt von 8 nm bis 25 nm. In diesem Dickenbereich der funktionellen Schicht wird eine vorteilhaft hohe Transmission im sichtbaren Spektralbereich und eine besonders vorteilhafte elektrische Leitfähigkeit erreicht. Die teilweise transparente Reflexionsschicht erstreckt sich vorzugsweise jeweils über einen Bereich von 10 cm² bis 1000 cm², besonders bevorzugt von 20 cm² bis 100 cm².

Typischerweise ist jeweils zwischen zwei benachbarten funktionellen Schichten der teilweise transparenten Reflexionsschicht zumindest eine dielektrische Schicht angeordnet. Bevorzugt ist unterhalb der ersten und/oder oberhalb der letzten funktionellen Schicht eine weitere dielektrische Schicht angeordnet. Eine dielektrische Schicht enthält zumindest eine Einzelschicht aus einem dielektrischen Material, beispielsweise enthaltend ein Nitrid wie Siliziumnitrid oder ein Oxid wie Aluminiumoxid. Dielektrische Schichten können aber auch mehrere Einzelschichten umfassen, beispielsweise Einzelschichten eines dielektrischen Materials, Glättungsschichten, Anpassungsschichten, Blockerschichten und/oder Antireflexionsschichten. Die Dicke einer dielektrischen Schicht beträgt beispielsweise von 10 nm bis 200 nm.

Die teilweise transparente Reflexionsschicht enthält besonders bevorzugt Indiumzinnoxid (ITO), fluordotiertes Zinnoxid (SnO₂:F) oder aluminiumdotiertes Zinkoxid (ZnO:Al) oder besteht daraus.

Alternativ kann die teilweise transparente Reflexionsschicht auch Carbo NanoBud (CNB) enthalten oder daraus bestehen. CNB sind eine Modifikation von Kohlenstoff. Die Kohlenstoffatome sind kovalent gebunden und bilden Fullerene, die als Röhrchen im Nanometerbereich angeordnet sind. Sie vereinen dabei Eigenschaften von Fullerenen mit denen von Nanoröhren, wodurch eine hohe mechanische Stabilität bei gleichzeitig guten elektrischen Eigenschaften gegeben ist.

Die geometrische Schichtdicke der teilweise transparenten Reflexionsschicht beträgt bevorzugt höchstens 1000 nm, besonders bevorzugt höchstens 100 nm, ganz besonders bevorzugt höchstens 15 nm. Insbesondere weist die teilweise transparente Reflexionsschicht bevorzugt eine Schichtdicke von 1 nm bis 100 nm, besonders bevorzugt 10 nm bis 50 nm auf. Dadurch kann eine vorteilhafte Reflektivität im IR-Bereich erreicht werden, ohne die Transmission zu stark herabzusetzen. Die geometrische Schichtdicke der teilweise transparenten Reflexionsschicht beträgt bevorzugt mindestens 6 nm, besonders bevorzugt mindestens 8 nm, insbesondere weist die teilweise transparente Reflexionsschicht genannte Schichtdicken auf, wenn sie aus einer Silberschicht besteht. Dünnere Schichtdicken können zu einer Entnetzung des Schichtaufbaus führen. Besonders bevorzugt beträgt die geometrische Schichtdicke der teilweise transparenten Reflexionsschicht von 10 nm bis 14 nm insbesondere von 11 nm bis 13 nm.

Ist von dünnen Schichten die Rede, also Schichten mit einer Dicke von unter 1000 nm, gilt: ist etwas "auf Basis" eines Materials ausgebildet, so besteht es mehrheitlich aus diesem Material, insbesondere im Wesentlichen aus diesem Material neben etwaigen Verunreinigungen oder Dotierungen. Die Angabe von Schichtdicken oder Dicken beziehen sich, sofern nicht anders angegeben, auf die geometrische Dicke einer Schicht.

Die erfindungsgemäße Verbundscheibe weist im mit der teilweise transparenten Reflexionsschicht versehenen Bereich bevorzugt im Spektralbereich von 380 nm bis 780 nm, besonders bevorzugt von 380 nm bis 680 nm, einen gemittelten Reflexionsgrad gegenüber p-polarisierter Strahlung von vorzugsweise mindestens 10 % auf, besonders bevorzugt von mindestens 12 %, insbesondere mindestens 15 %. Damit wird ein hinreichend intensitätsstarkes Projektionsbild erzeugt. Unabhängig davon weist die Verbundscheibe im mit der opaken Reflexionsschicht versehenen Bereich bevorzugt im Spektralbereich von 380 nm bis 780 nm, besonders bevorzugt von 380 nm bis 680 nm, einen gemittelten Reflexionsgrad gegenüber p-polarisierter Strahlung von vorzugsweise mindestens 30 % auf, besonders bevorzugt von mindestens 40 % auf, insbesondere von mindestens 70 % auf. Die opake Reflexionsschicht und die teilweise transparente Reflexionsschicht können außerhalb des Durchsichtbereiches miteinander überlappen. In dem überlappten Bereich wird der prozentuale Anteil des reflektierten Lichtes im Wesentlichen von der opaken Reflexionsschicht definiert.

Der Reflexionsgrad wird gemessen mit einem Einfallswinkel von 65° zur innenraumseitigen Flächennormalen (innenraumseitige Oberfläche der Innenscheibe), was etwa der Bestrahlung durch übliche HUD-Projektoren entspricht. Der Spektralbereich von 380 nm bis 680 nm wurde zur Charakterisierung der Reflexionseigenschaften herangezogen, weil der optische Eindruck eines Betrachters in erster Linie durch diesen Spektralbereich geprägt wird. Außerdem deckt er die für die HUD-Darstellung relevanten Wellenlängen ab (RGB: 473 nm, 550 nm, 630 nm). Der Einfallswinkel der Projektorstrahlung ist der Winkel zwischen dem Einfallsvektor der Projektorstrahlung und der innenraumseitigen Flächennormale (also die Flächennormale auf die innenraumseitige externe Oberfläche der Verbundscheibe, welche hier gleichzeitig die innenraumseitige Oberfläche der Innenscheibe ist).

Der Reflexionsgrad beschreibt den Anteil der insgesamt eingestrahlten Strahlung, der reflektiert wird. Er wird in % angegeben (bezogen auf 100% eingestrahlte Strahlung) oder als einheitenlose Zahl von 0 bis 1 (normiert auf die eingestrahlte Strahlung). Aufgetragen in Abhängigkeit von der Wellenlänge bildet er das Reflexionsspektrum. Die Ausführungen zum Reflexionsgrad (oder Prozentangaben zur Reflexion) gegenüber p-polarisierter, unpolarisierter oder s-polarisierter Strahlung beziehen sich im Rahmen der vorliegenden Erfindung auf den Reflexionsgrad gemessen mit einem Einfallswinkel von 65° zur innenraumseitigen Flächennormalen. Die Angaben zum Reflexionsgrad beziehungsweise zum Reflexionsspektrum beziehen sich auf eine Reflexionsmessung mit einer Lichtquelle, die im betrachteten Spektralbereich gleichmäßig abstrahlt mit einer normierten Strahlungsintensität von 100%.

Die oben genannten gewünschten Reflexionscharakteristika der teilweise transparenten Reflexionsschicht oder der opaken Reflexionsschicht werden insbesondere durch die Wahl der Materialien und Dicken sowie dem Aufbau der einzelnen Schichten oder Schichtenfolgen erreicht. Die teilweise transparente und opake Reflexionsschicht können so geeignet eingestellt werden.

Die opake Reflexionsschicht umfasst vorzugsweise mindestens ein Metall ausgewählt aus einer Gruppe, bestehend aus Aluminium, Magnesium, Zinn, Indium, Titan, Tantal, Niob, Nickel, Kupfer, Chrom, Cobalt, Eisen, Mangan, Zirkonium, Cer, Scandium, Yttrium, Silber, Gold, Platin und Palladium, Ruthenium oder Mischungen davon. Alternativ oder zusätzlich umfasst die Reflexionsschicht Oxide, Carbide, Silizium, Siliziumverbindungen und/oder Nitride ausgewählt aus einer Gruppe, bestehend aus mit Bor dotiertem Silizium, Silizium-Zirconium-Mischnitrid, Siliziumnitrid, Titanoxid, Siliziumoxid, Titancarbid, Zirconiumcarbid, Silizium-Zirconium-Aluminium oder Mischungen davon. Aluminium, Titan, Nickel-Chrom und/oder Nickel werden bevorzugt auf der Innenscheibe oder der Außenscheibe aufgebracht, da sie eine hohe Reflexion für p-polarisiertes oder s-polarisiertes Licht aufweisen können. Sie eignen sich somit besonders als Bestandteil einer Projektionsanordnung. Die opake Reflexionsschicht weist vorzugsweise eine Dicke von 10 nm (Nanometer) bis 100 µm (Mikrometer), besonders bevorzugt von 50 nm bis 50 µm, insbesondere von 100 nm bis 5 µm auf.

In einer besonderen Ausführungsform der Erfindung ist die opake Reflexionsschicht eine Beschichtung, enthaltend einen Dünnschichtstapel, also eine Schichtenfolge dünner Einzelschichten. Dieser Dünnschichtstapel enthält eine oder mehrere elektrisch leitfähige Schichten auf Basis von Nickel, Nickel-Chrom, Titan und/oder Aluminium. Die elektrisch leitfähige Schicht auf Basis von Nickel, Nickel-Chrom, Titan und/oder Aluminium verleiht der opaken Reflexionsschicht grundlegende reflektierende Eigenschaften und außerdem eine IRreflektierende Wirkung und eine elektrische Leitfähigkeit. Die elektrisch leitfähige Schicht ist auf Basis von Nickel, Nickel-Chrom, Titan und/oder Aluminium ausgebildet. Die leitfähige Schicht enthält bevorzugt mindestens 90 Gew. % Nickel, Titan und/oder Aluminium, besonders bevorzugt mindestens 99 Gew. % Aluminium, ganz besonders bevorzugt mindestens 99,9 Gew. % Nickel, Titan und/oder Aluminium. Die Schicht auf Basis von Aluminium, Nickel-Chrom, Nickel und/oder Titan kann Dotierungen aufweisen, beispielsweise Palladium, Gold, Kupfer oder Silber. Materialen auf der Basis von Aluminium, Nickel, Nickel-Chrom, und/oder Titan sind besonders geeignet, um Licht, besonders bevorzugt p-polarisiertes Licht, zu reflektieren. Die Verwendung von Nickel, Nickel-Chrom, Titan und/oder Aluminium in Reflexionsschichten hat sich als besonders vorteilhaft bei der Reflexion von Licht erwiesen. Aluminium, Nickel, Nickel-Chrom, und/oder Titan sind im Vergleich zu vielen anderen Metallen wie beispielsweise Gold oder Silber deutlich günstiger. Außerdem weisen diese Metalle eine hohe chemische und thermomechanische Beständigkeit auf. Die Einzelschichten des Dünnschichtstapels weisen vorzugsweise eine Dicke von 10 nm bis 1 µm auf. Der Dünnschichtstapel weist vorzugsweise 2 bis 20 Einzelschichten und insbesondere 5 bis 10 Einzelschichten auf.

In einer besonders bevorzugten Ausführungsform der Erfindung ist die opake Reflexionsschicht eine reflektierende Folie, die metallfrei ist und sichtbare Lichtstrahlen mit einer p-Polarisation reflektiert. Die opake Reflexionsschicht ist dann vorzugsweise eine Folie, die auf Basis synergetisch miteinander wirkenden Prismen und reflektierender Polarisatoren funktioniert. Derartige Folien zur Verwendung von Reflexionsschichten sind im Handel erhältlich, beispielsweise von der 3M Company. Auf diese Weise kann eine aufwendige Metallabscheidung vermieden werden. Die opake Reflexionsschicht ist als reflektierende Folie vorzugsweise innerhalb der thermoplastischen Zwischenschicht angeordnet.

In einer weiteren besonders bevorzugten Ausführungsform der Erfindung enthält die opake Reflexionsschicht
- einen dielektrischer Schichtstapel enthaltend TiO₂-Schichten und SiO₂-Schichten,
- einen dielektrischer Schichtstapel enthaltend SiZrN-Schichten und SiO₂-Schichten,
- einen Schichtstapel enthaltend Si:B-Schichten oder SiZrAl-Schichten,
- einen Schichtstapel enthaltend Si-Schichten und SiO₂-Schichten,
- einen Schichtstapel enthaltend Si-Schichten und Si₃N₄-Schichten oder
- einen karbidischer Schichtstapel enthaltend TiC-Schichten und/oder ZrC-Schichten oder besteht aus einem oder mehreren dieser Schichtstapel. Die beschriebenen Schichtstapel weisen geeignete Reflexionseigenschaften auf, um als Teil einer Projektionsanordnung ein homogenes Bild zu erzielen.

Grundsätzlich kann die teilweise transparente Reflexionsschicht und/oder die opake Reflexionsschicht durch physikalische oder chemische Gasphasenabscheidung, also eine PVD- oder CVD-Beschichtung (PVD: *physical vapour deposition, CVD: chemical vapour deposition*) sein, oder beispielsweise mittels des Sol-Gel-Verfahrens aufgebracht werden. Solche Beschichtungen lassen sich mit besonders hoher optischer Qualität und mit besonders geringer Dicke erzeugen. Sind die teilweise transparente Reflexionsschicht und/oder die opake Reflexionsschicht ein Schichtstapel werden die einzelnen Schichten des Schichtstapels konsekutiv, also nacheinander, aufgebracht. Die Aufbringung von Schichten mittels des Sol-Gel-Verfahrens ist dem Fachmann bekannt und kann beispielsweise aus WO2021209201A1 entnommen werden.

Eine PVD-Beschichtung kann eine durch Kathodenzerstäubung aufgebrachte ("aufgesputterte") Beschichtung, insbesondere eine durch magnetfeldunterstütze Kathodenzerstäubung aufgebrachte (Magnetronsputtern) Beschichtung sein. Vorzugsweise werden die opake Reflexionsschicht und die teilweise transparente Reflexionsschicht durch Magnetronsputtern aufgebracht. Mittels Magnetronsputtern kann eine homogene und wenige Nanometer dicke Schicht effizient erstellt werden.

Wird die opake Reflexionsschicht und/oder die teilweise transparente Reflexionsschicht mittels chemischer Gasphasenabscheidung aufgebracht, dann erfolgt dies vorzugsweise mittels plasmaunterstützter chemischer Gasphasenabscheidung (PECVD), insbesondere findet diese Herstellung bei atmosphärischem Druck statt (APCVD). Der Vorteil plasmagestützten chemischen Gasphasenabscheidung ist die Geschwindigkeit der Aufbringung bei gleichzeitige hoher Homogenität der Schichten im Vergleich zu vielen anderen Verfahren. Im Besonderen Siliziumoxid lässt sich mittels dieser Herstellung homogen und effizient auf einem Substrat aufbringen.

Die opake Reflexionsschicht wird bevorzugt durch physikalische Gasphasenabscheidung (PVD) auf die außenseitige Oberfläche der Innenscheibe aufgebracht, besonders bevorzugt durch Kathodenzerstäubung ("Sputtern"), ganz besonders bevorzugt durch magnetfeldunterstütze Kathodenzerstäubung ("Magnetronsputtern"). Die opake Reflexionsschicht wird bevorzugt vor der Lamination aufgebracht. Statt die opake Reflexionsschicht auf eine Scheibenoberfläche aufzubringen, kann sie grundsätzlich auch auf einer Trägerfolie aufgebracht werden, die in der Zwischenschicht angeordnet wird.

Vorzugsweise ist die teilweise transparente Reflexionsschicht und/oder die opake Reflexionsschicht auf der innenraumseitigen Oberfläche der Außenscheibe oder auf der außenseitigen Oberfläche der Innenscheibe aufgebracht. Die teilweise transparente Reflexionsschicht und/oder die opake Reflexionsschicht kann auch auf der Maskierungsschicht und/oder der außenseitigen Oberfläche der Innenscheibe und/oder der innenraumseitigen Oberfläche der Außenscheibe aufgebracht sein. Alternativ kann die teilweise transparente Reflexionsschicht und/oder die opake Reflexionsschicht auch auf einer Folie, vorzugsweise aus einem organischen Polymer, aufgebracht sein und die mit der teilweise transparente Reflexionsschicht und/oder die opake Reflexionsschicht versehene Folie innerhalb der thermoplastischen Zwischenschicht angeordnet sein.

In einer besonders bevorzugten Ausführungsform ist die opake Reflexionsschicht auf der außenseitigen Oberfläche der Innenscheibe aufgebracht. Bevorzugt ist die teilweise transparente Reflexionsschicht ebenfalls auf der außenseitigen Oberfläche der Innenscheibe aufgebracht. Sollte die teilweise transparente Reflexionsschicht mit der opaken Reflexionsschicht bereichsweise überlappen, so ist in diesem Bereich vorzugsweise die opake Reflexionsschicht auf der außenseitigen Oberfläche aufgebracht und die teilweise transparente Reflexionsschicht ist in diesem Bereich auf der opaken Reflexionsschicht aufgebacht. Die Aufbringung der der opaken Reflexionsschicht und der teilweise transparenten Reflexionsschicht auf der außenseitigen Oberfläche der Innenscheibe verbessert die Reflexionseigenschaften der Schichten im Hinblick auf Doppelbilder durch die Oberflächen der Innenscheibe. Dadurch, dass die opake Reflexionsschicht direkt auf der außenseitigen Oberfläche der Innenscheibe aufgebracht ist und nicht vollständig oder bereichseiweise auf der teilweise transparenten Reflexionsschicht wird eine verbesserte Farbhomogenität erzielt.

Alternativ ist die teilweise transparente Reflexionsschicht auf der außenseitigen Oberfläche der Innenscheibe aufgebracht und die opake Reflexionsschicht ist bereichsweise oder vollständig auf der teilweise transparenten Reflexionsschicht aufgebracht. Der gegebenenfalls nicht auf der teilweise transparenten Reflexionsschicht aufgebrachte Anteil der opaken Reflexionsschicht ist auf der außenseitigen Oberfläche der Innenscheibe aufgebracht. Diese Anordnung ermöglicht ein vereinfachtes Herstellungsverfahren der erfindungsgemäßen Verbundscheibe, da die teilweise transparente Reflexionsschicht vorzugsweise über einen Großteil der Fläche der Verbundscheibe aufgebracht wird, wird ihre Aufbringung vorzugsweise vor der Aufbringung der opaken Reflexionsschicht durchgeführt.

In einer ganz besonders bevorzugten Ausführungsform ist die opake Reflexionsschicht auf einem Bereich der teilweise transparenten Reflexionsschicht aufgebracht. Der Bereich der teilweise transparenten Reflexionsschicht befindet sich erfindungsgemäß außerhalb des Durchsichtbereiches der Verbundscheibe. Vorzugsweise erstreckt sich die teilweise transparente Reflexionsschicht über mindestens 50 %, besonders bevorzugt mindestens 70 %, insbesondere mindestens 90 % der Fläche der Verbundscheibe.

In einer bevorzugten Ausführungsform ist die opake Reflexionsschicht auf der innenraumseitigen Oberfläche der Außenscheibe aufgebracht. Alternativ ist die opake Reflexionsschicht eine reflektierende Folie und innerhalb der thermoplastischen Zwischenschicht angeordnet. Durch diese Anordnung kann die opake Reflexionsschicht auch nach der Beschichtung der Scheiben noch eingesetzt werden, was Produktionsprozesse optimiert.

In einer weiteren bevorzugten Ausführungsform ist die Maskierungsschicht zwischen der Außenscheibe und der Innenscheibe angeordnet Hierdurch ist die Maskierungsschicht vor äußeren Einflüssen besser geschützt. Die teilweise transparente Reflexionsschicht ist bevorzugt in Durchsicht durch die Verbundscheibe zwischen der Maskierungsschicht und der opaken Reflexionsschicht angeordnet. Hierdurch werden nicht die Reflexionseigenschaften der opaken Reflexionsschicht vermindert.

Die einzelnen Schichten der Verbundscheibe sind vorzugsweise in einer der folgenden Reihenfolgen angeordnet:
- Außenscheibe - thermoplastische Zwischenschicht - teilweise transparente Reflexionsschicht - opake Reflexionsschicht - Innenscheibe,
- Außenscheibe -thermoplastische Zwischenschicht - opake Reflexionsschicht - teilweise transparente Reflexionsschicht - Innenscheibe,
- Außenscheibe - teilweise transparente Reflexionsschicht - opake Reflexionsschicht - thermoplastische Zwischenschicht - Innenscheibe,
- Außenscheibe - opake Reflexionsschicht - teilweise transparente Reflexionsschicht - thermoplastische Zwischenschicht - Innenscheibe,
- Außenscheibe - Maskierungsschicht - thermoplastische Zwischenschicht - teilweise transparente Reflexionsschicht - opake Reflexionsschicht - Innenscheibe,
- Außenscheibe - Maskierungsschicht - thermoplastische Zwischenschicht - opake Reflexionsschicht - teilweise transparente Reflexionsschicht - Innenscheibe,
- Außenscheibe - thermoplastische Zwischenschicht - Maskierungsschicht - teilweise transparente Reflexionsschicht - opake Reflexionsschicht - Innenscheibe,
- Außenscheibe - thermoplastische Zwischenschicht - Maskierungsschicht - opake Reflexionsschicht - teilweise transparente Reflexionsschicht - Innenscheibe,
- Außenscheibe - thermoplastische Zwischenschicht - teilweise transparente Reflexionsschicht - Maskierungsschicht - opake Reflexionsschicht - Innenscheibe,
- Außenscheibe - Maskierungsschicht - teilweise transparente Reflexionsschicht - opake Reflexionsschicht - thermoplastische Zwischenschicht - Innenscheibe und
- Außenscheibe - Maskierungsschicht - opake Reflexionsschicht - teilweise transparente Reflexionsschicht - thermoplastische Zwischenschicht - Innenscheibe.

Die opake Reflexionsschicht und die teilweise transparente Reflexionsschicht können nicht deckungsgleich aufgebracht sein, da die teilweise transparente Reflexionsschicht sich mindestens über den Durchsichtbereich der Verbundscheibe erstreckt und die opake Reflexionsschicht sich nicht über den Durchsichtbereich der Verbundscheibe erstreckt. In der gezeigten bevorzugten Schichtenreihenfolge sind die opake Reflexionsschicht und die teilweise transparente Reflexionsschicht daher nur in einem gegebenenfalls vorhandenen Bereich, in dem sie miteinander überlappen, in der gezeigten Reihenfolge gestapelt. In allen anderen Bereichen ist entweder die opake Reflexionsschicht oder die teilweise transparente Reflexionsschicht vorhanden (bzw. keine der beiden Schichten). Beispielhaft gezeigt ist dies für die folgende Schichtenfolge
- Außenscheibe - thermoplastische Zwischenschicht - teilweise transparente Reflexionsschicht - opake Reflexionsschicht - Innenscheibe.

In einem Bereich, in dem die teilweise transparente Reflexionsschicht und die opake Reflexionsschicht überlappen, ist die teilweise transparente Reflexionsschicht also auf der opaken Reflexionsschicht angeordnet. Im Durchsichtbereich ist erfindungsgemäß keine opake Reflexionsschicht vorhanden, sodass die teilweise transparente Reflexionsschicht auf der außenseitigen Oberfläche der Innenscheibe angeordnet ist.

Die Außenscheibe und die Innenscheibe sind bevorzugt aus transparentem oder teilweise transparentem Glas gefertigt, insbesondere aus Kalk-Natron-Glas, was für Fensterscheiben üblich ist. Die Scheiben können grundsätzlich aber auch aus anderen Glasarten (beispielsweise Borosilikatglas, Quarzglas, Aluminosilikatglas) oder transparenten Kunststoffen (beispielsweise Polymethylmethacrylat oder Polycarbonat) gefertigt sein. Die Dicke der Außenscheibe und der Innenscheibe kann breit variieren. Vorzugsweise werden Scheiben mit einer Dicke im Bereich von 0,8 mm bis 5 mm, bevorzugt von 1,4 mm bis 2,5 mm verwendet, beispielsweise die mit den Standarddicken 1,6 mm oder 2,1 mm. Die Außenscheibe und die Innenscheiben können unabhängig voneinander nicht vorgespannt, teilvorgespannt oder vorgespannt sein. Soll mindestens eine der Scheiben eine Vorspannung aufweisen, so kann dies eine thermische oder chemische Vorspannung sein.

Die thermoplastische Zwischenschicht ist bevorzugt als mindestens eine thermoplastische Verbundfolie ausgebildet und ist auf Basis von Ethylenvinylacetat (EVA), Polyvinylbutyral (PVB) oder Polyurethan (PU) oder Gemische oder Copolymere oder Derivate davon, besonders bevorzugt auf Basis von Polyvinylbutyral (PVB) und zusätzlich dem Fachmann bekannte Additive wie beispielsweise Weichmacher ausgebildet. Bevorzugt enthält die thermoplastische Folie mindestens einen Weichmacher.

Die thermoplastische Zwischenschicht kann durch eine einzelne Folie ausgebildet sein oder auch durch mehr als eine Folie. Die thermoplastische Zwischenschicht kann durch eine oder mehrere übereinander angeordnete thermoplastische Folien ausgebildet werden, wobei die Dicke der thermoplastischen Zwischenschicht nach der Lamination des Schichtstapels bevorzugt von 0,25 mm bis 1 mm beträgt, typischerweise 0,38 mm oder 0,76 mm. Die thermoplastische Zwischenschicht kann auch aus einer Folie ausgebildet sein, die bereichsweise gefärbt und damit opak ist. Die Maskierungsschicht kann auch ein Bestandteil der thermoplastischen Zwischenschicht sein. Die Zwischenschicht kann auch aus mehr als einer Folie ausgebildet sein und die mindestens zwei Folien sich über unterschiedliche Bereiche der Fläche der Verbundscheibe erstrecken.

Die thermoplastische Zwischenschicht kann auch eine funktionale thermoplastische Folie sein, insbesondere eine Folie mit akustisch dämpfenden Eigenschaften, eine Infrarotstrahlung reflektierende Folie, eine Infrarotstrahlung absorbierende Folie und/oder eine UV-Strahlung absorbierende Folie. So kann die thermoplastische Zwischenschicht beispielsweise auch eine Bandfilterfolie sein.

Die Außenscheibe, die Innenscheibe und die Verbundscheibe können eine beliebige dreidimensionale Form aufweisen. Vorzugsweise haben die Innenscheibe und die Außenscheibe keine Schattenzonen, so dass sie effizient durch Kathodenzerstäubung beschichtet werden können. Bevorzugt sind die Innenscheibe und Außenscheibe und somit auch die Verbundscheibe plan oder leicht oder stark in eine Richtung oder in mehrere Richtungen des Raumes gebogen

Ist etwas "auf Basis" eines polymerischen Materials ausgebildet, so besteht es mehrheitlich, also zu mindestens 50 %, vorzugsweise zu mindestens 60 % und insbesondere zu mindestens 70%, aus diesem Material. Es kann also noch weitere Materialien wie beispielsweise Stabilisatoren oder Weichmacher enthalten.

Ein weiterer Aspekt der Erfindung betrifft eine Projektionsanordnung, umfassend eine erfindungsgemäße Verbundscheibe, einen Projektor, welcher ein Bild, vorzugsweise über die Innenscheibe, auf die teilweise transparente Reflexionsschicht projiziert, und einem weiteren Projektor, welcher ein Bild, vorzugsweise über die Innenscheibe, auf die opake Reflexionsschicht projiziert. Mit anderen Worten: der jeweilige Projektor bestrahlt die opake oder teilweise transparente Reflexionsschicht mit sichtbarem Licht, wobei die jeweilige Reflexionsschicht das sichtbare Licht zumindest teilweise reflektiert. Der Projektor und der weitere Projektor sind vorzugsweise der innenraumseitigen Oberfläche der Innenscheibe zugewandt. Ist die Verbundscheibe in einem eingebauten Zustand (beispielsweise als Windschutzscheibe in einem Fahrzeug) so bestrahlen der Projektor und der weitere Projektor die Reflexionsschicht bzw. den HUD-Bereich von einem Innenraum (Fahrzeuginnenraum) aus.

Die Strahlung des Projektors und/oder des weiteren Projektors ist bevorzugt überwiegend p-polarisiert, weist also einen p-polarisierten Strahlungsanteil von größer als 50% auf. Je höher der Anteil der p-polarisierten Strahlung an der Gesamtstrahlung des Projektors ist, desto intensitätsstärker ist das gewünschte Projektionsbild und desto intensitätsschwächer sind unerwünschte Reflexionen an den Oberflächen der Windschutzscheibe. Der p-polarisierte Strahlungsanteil des Projektors beträgt bevorzugt mindestens 70%, besonders bevorzugt mindestens 80% und insbesondere mindestens 90%. In einer besonders vorteilhaften Ausgestaltung ist die Strahlung des Projektors im Wesentlichen rein p-polarisiert ist - der p-polarisierte Strahlungsanteil beträgt also 100% oder weicht nur unwesentlich davon ab.

Die Angabe der Polarisationsrichtung bezieht sich dabei auf die Einfallsebene der Strahlung auf der Verbundscheibe. Mit p-polarisierter Strahlung wird eine Strahlung bezeichnet, deren elektrisches Feld in der Einfallsebene schwingt. Mit s-polarisierter Strahlung wird eine Strahlung bezeichnet, deren elektrisches Feld senkrecht zur Einfallsebene schwingt. Die Einfallsebene wird durch den Einfallsvektor und die Flächennormale der Verbundscheibe im geometrischen Zentrum des bestrahlten Bereichs aufgespannt.

Ist die Projektionsanordnung ein Bestandteil eines Fahrzeugs, sind der Projektor und der weitere Projektor vorzugsweise im Armaturenbrett des Fahrzeugs angeordnet. Das vom Projektor auf die Reflexionsschicht projizierte Bild wird hierbei in den Fahrzeuginnenraum, beispielsweise in das Blickfeld eines Insassen, reflektiert. Aufgrund der opaken Reflexionsschicht, welche optional zusätzlich vor der Maskierungsschicht angeordnet ist, kann das auf die opake Reflexionsschicht projizierte Bild visuell mit einem hohen Kontrast wahrgenommen werden. Hierdurch können Projektoren mit einem niedrigeren Energiebedarf eingesetzt werden. Im Vergleich zu Projektoren für klassische Head-Up-Displays kann der Energiebedarf des Projektors um bis zu 20 % reduziert werden.

Der Projektor und/oder der weitere Projektor sind vorzugsweise ein Liqiud-crystal- (LCD-) Display, Thin-Film-Transistor- (TFT-) Display, Light-Emitting-Diode- (LED-) Display, Organic-Light-Emitting-Diode- (OLED-) Display, Electroluminescent- (EL-) Display oder microLED-Display.

Wie bei HUDs und auf einer ähnlichen Technologie basierenden Projektionsanordnungen üblich bestrahlt der Projektor und der weitere Projektor, insbesondere mit einer p-polarisierten Strahlung im Wellenlängenbereich von 380 nm bis 780 nm, die jeweilige Reflexionsschicht, also eine Projektionsfläche der Reflexionsschicht. Die p-polarisierte Strahlung wird Bereich der Projektionsfläche in Richtung eines Betrachters reflektiert, wodurch ein virtuelles Bild erzeugt wird, welches der Betrachter von ihm ausgesehen hinter der Verbundscheibe wahrnimmt (Im Fall einer HUD). Die Strahlrichtung des Projektors und/oder des weiteren Projektors kann typischerweise durch Spiegel variiert werden, insbesondere vertikal, um die Projektion an die Körpergröße des Betrachters anzupassen. Der Bereich, in dem sich die Augen des Betrachters bei gegebener Spiegelstellung befinden müssen, wird als Eyeboxfenster bezeichnet. Dieses Eyeboxfenster kann durch Verstellung der Spiegel vertikal verschoben werden, wobei der gesamte dadurch zugängliche Bereich (das heißt die Überlagerung aller möglichen Eyeboxfenster) als Eyebox bezeichnet wird. Ein innerhalb der Eyebox befindlicher Betrachter kann das virtuelle Bild wahrnehmen. Damit ist natürlich gemeint, dass sich die Augen des Betrachters innerhalb der Eyebox befinden müssen, nicht etwa der gesamte Körper.

Die hier verwendeten Fachbegriffe aus dem Bereich der HUDs sind dem Fachmann allgemein bekannt. Für eine ausführliche Darstellung sei auf die Dissertation "Simulationsbasierte Messtechnik zur Prüfung von Head-Up Displays" von Alexander Neumann am Institut für Informatik der Technischen Universität München (München: Universitätsbibliothek der TU München, 2012) verwiesen, insbesondere auf Kapitel 2 "Das Head-Up Display".

Die vorstehenden Ausführungen und bevorzugten Ausgestaltungen im Zusammenhang mit der Verbundscheibe oder der Projektionsanordnung gelten für das Verfahren gleichermaßen. Die nachstehenden Ausführungen und bevorzugten Ausgestaltungen im Zusammenhang mit dem erfindungsgemäßen Verfahren gelten für die Verbundscheibe und Projektionsanordnung gleichermaßen.

Ein weiterer Aspekt der Erfindung betrifft ein Verfahren zur Herstellung der erfindungsgemäßen Verbundscheibe. Die Verfahrensschritte umfassen, vorzugsweise in der angegebenen Reihenfolge, die folgenden Verfahrensschritte:
(A) ein Schichtstapel aus der Außenscheibe, der thermoplastischen Zwischenschicht (4) und der Innenscheibe bereitgestellt wird,
(B) die teilweise transparente Reflexionsschicht und die opake Reflexionsschicht zwischen die Außenscheibe und die Innenscheibe angeordnet werden und
(C) der Schichtstapel zu der Verbundscheibe laminiert wird.

In einer bevorzugten Ausführungsform ist der zweite Verfahrensschritt (B) in drei einzelne Schritte aufgeteilt:
(B.1) Die teilweise transparente Reflexionsbeschichtung wird auf die Außenscheibe oder die Innenscheibe, bevorzugt auf die innenraumseitige Oberfläche der Innenscheibe, aufgebracht.
(B.2) Die Innenscheibe und die Außenscheibe werden in einem Biegeverfahren gebogen, sodass sie vorzugsweise den Anforderungen an eine Windschutzscheibe für ein Fahrzeug genügen.
(B.3) Die opake Reflexionsschicht wird auf die gebogene Außenscheibe und gegebenenfalls die teilweise transparente Reflexionsschicht aufgebracht oder die opake Reflexionsschicht wird auf die gebogene Innenscheibe und gegebenenfalls die teilweise transparente Reflexionsschicht aufgebracht.

Die Lamination des Schichtstapels erfolgt unter Einwirkung von Hitze, Vakuum und/oder Druck, wobei die einzelnen Schichten durch mindestens eine thermoplastische Folie miteinander verbunden (laminiert) werden. Es können an sich bekannte Verfahren zur Herstellung einer Verbundscheibe verwendet werden. Es können beispielsweise sogenannte Autoklav-Verfahren bei einem erhöhten Druck von etwa 10 bar bis 15 bar und Temperaturen von 130 °C bis 145 °C über etwa 2 Stunden durchgeführt werden. An sich bekannte Vakuumsack- oder Vakuumringverfahren arbeiten beispielsweise bei etwa 200 mbar und 130 °C bis 145 °C. Der Schichtstapel kann auch in einem Kalander zwischen mindestens einem Walzenpaar zu einer Verbundscheibe gepresst werden. Anlagen dieser Art sind zur Herstellung von Verbundscheiben bekannt und verfügen normalerweise über mindestens einen Heiztunnel vor einem Presswerk. Die Temperatur während des Pressvorgangs beträgt beispielsweise von 40 °C bis 150 °C. Kombinationen von Kalander- und Autoklavverfahren haben sich in der Praxis besonders bewährt. Alternativ können Vakuumlaminatoren eingesetzt werden. Diese bestehen aus einer oder mehreren beheizbaren und evakuierbaren Kammern, in denen die Außenscheibe und die Innenscheibe innerhalb von beispielsweise etwa 60 Minuten bei verminderten Drücken von 0,01 mbar bis 800 mbar und Temperaturen von 80°C bis 170°C laminiert werden können.

Die erfindungsgemäße Verbundscheibe kann beispielsweise die Dachscheibe, Windschutzscheibe, Seitenscheibe oder Heckscheibe eines Fahrzeugs oder eine andere Fahrzeugverglasung sein, beispielsweise eine Trennscheibe in einem Fahrzeug, bevorzugt in einem Schienenfahrzeug, einem Auto oder einem Bus. Alternativ kann die Verbundscheibe eine Architekturverglasung, beispielsweise in einer Außenfassade eines Gebäudes oder eine Trennscheibe im Innern eines Gebäudes, oder ein Einbauteil in Möbeln oder Geräten sein.

Die Erfindung wird anhand einer Zeichnung und Ausführungsbeispielen näher erläutert. Die Zeichnung ist eine schematische Darstellung und nicht maßstabsgetreu. Die Zeichnung schränkt die Erfindung in keiner Weise ein. Es zeigen:
- Figur 1: eine Ausführungsform der erfindungsgemäßen Verbundscheibe in einer Draufsicht,
- Figur 2: eine Querschnittansicht einer Projektionsanordnung mit der Verbundscheibe aus Figur 1,
- Figur 3: ein vergrößerter Randbereich der Projektionsanordnung aus Figur 2 in einer Querschnittansicht und
- Figur 4-7: weitere Ausführungsformen der erfindungsgemäßen Verbundscheibe in einer Projektionsanordnung in einer Querschnittansicht.

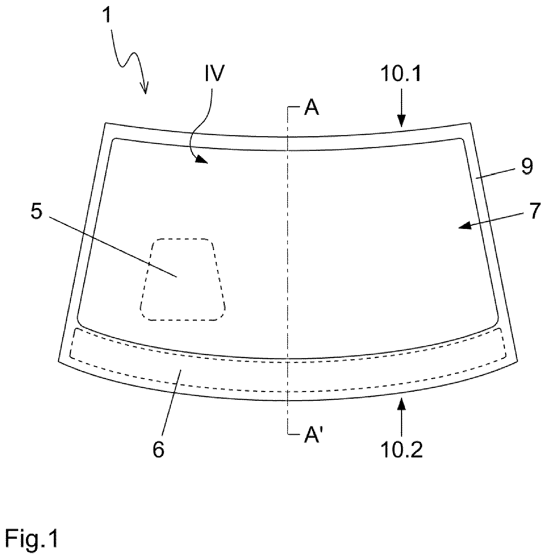

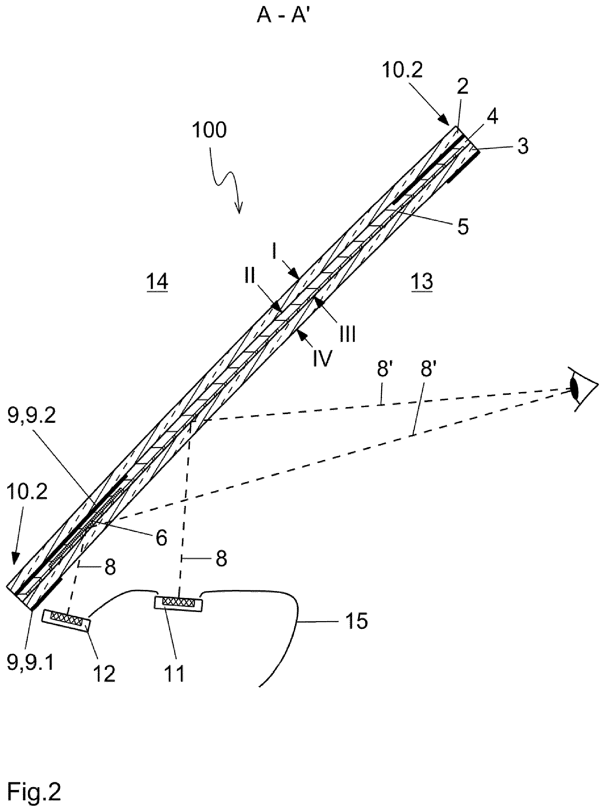

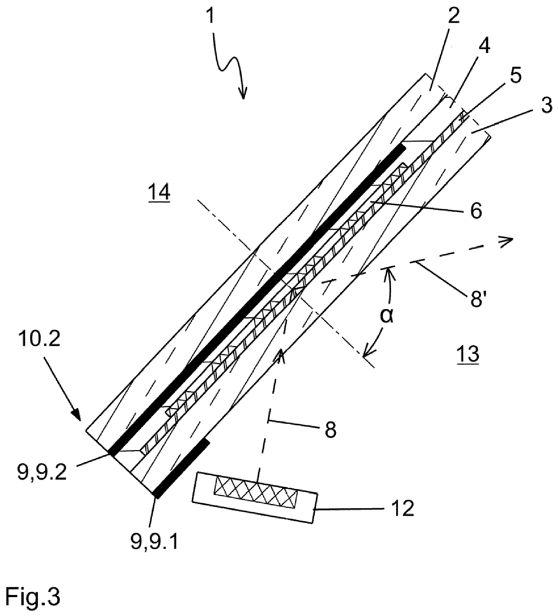

Die Figuren 1 bis 3 zeigen unterschiedliche Aspekte einer Ausgestaltung der erfindungsgemäßen Verbundscheibe 1. Die Figur 1 zeigt die erfindungsgemäße Verbundscheibe 1 in der Form einer Windschutzscheibe für ein Fahrzeug. Die Verbundscheibe 1 ist in einer Draufsicht gezeigt, wobei auf eine innenraumseitige Oberfläche IV der Verbundscheibe 1 geblickt wird. Die Figur 2 zeigt die Verbundscheibe 1 als Bestandteil einer erfindungsgemäßen Projektionsanordnung 100 in einer Querschnittansicht, wobei die Projektionsanordnung 100 in ein Fahrzeug eingebaut ist. Die Querschnittansicht der Figur 2 entspricht der Schnittlinie A-A' der Verbundscheibe 1, wie in Figur 1 angedeutet ist. Die Figur 3 zeigt einen vergrößerten Ausschnitt der Projektionsanordnung 100 aus Figur 2, wobei der untere Randbereich benachbart zur Unterkante 10.2 der Verbundscheibe 1 gezeigt ist.

Die Verbundscheibe 1 weist eine Oberkante 10.1 und eine Unterkante 10.2 sowie zwei die Oberkante 10.1 und die Unterkante 10.2 verbindende Seitenkanten auf (alles zusammen ergibt eine umlaufende Kante der Verbundscheibe 1). Mit der Unterkante 10.2 (auch Motorkante genannt) der Verbundscheibe 1 ist die Kante gemeint, welche in Einbaulage dem Boden zugewandt ist. Mit der Oberkante 10.1 (auch Dachkante genannt) der Verbundscheibe 1 ist die Kante gemeint, welche in Einbaulage in ein Fahrzeug dem Fahrzeugdach zugewandt ist.

Die Verbundscheibe 1 umfasst eine Außenscheibe 2, eine Innenscheibe 3 und eine zwischen der Außenscheibe 2 und der Innenscheibe 3 angeordnete thermoplastische Zwischenschicht 4. Die Außenscheibe 2 weist eine von der thermoplastischen Zwischenschicht 4 abgewandte außenseitige Oberfläche I und eine der thermoplastischen Zwischenschicht 4 zugewandte innenraumseitige Oberfläche II auf. Die Innenscheibe 3 weist eine der thermoplastischen Zwischenschicht 4 zugewandte außenseitige Oberfläche III und eine von der thermoplastischen Zwischenschicht 4 abgewandte innenraumseitige Oberfläche IV auf. Die außenseitige Oberfläche I der Außenscheibe 11 ist auch gleichzeitig die Oberfläche der Verbundscheibe 1, welche der äußeren Umgebung 14 zugewandt ist, und die innenraumseitige Oberfläche IV der Innenscheibe 3 ist auch gleichzeitig die Oberfläche der Verbundscheibe 1, welche dem Innenraum 13 des Fahrzeugs zugewandt ist. Die Verbundscheibe 1 weist beispielsweise eine für Windschutzscheiben übliche Form und Krümmung auf.

Die Außenscheibe 2 und die Innenscheibe 3 bestehen jeweils aus Glas, vorzugsweise thermisch vorgespanntem Kalk-Natron-Glas und sind für sichtbares Licht transparent. Die Außenscheibe 2 weist beispielsweise eine Dicke von 2,1 mm auf und die Innenscheibe 3 beispielseiweise eine Dicke von 1,5 mm. Die thermoplastische Zwischenschicht 4 umfasst einen thermoplastischen Kunststoff, vorzugsweise Polyvinylbutyral (PVB), Ethylenvinylacetat (EVA) und/oder Polyethylenterephthalat (PET).

Auf der innenraumseitigen Oberfläche IV der Innenscheibe 3 ist eine erste opake Maskierungsschicht 9, 9.1 aufgebracht. Auf der innenraumseitigen Oberfläche II der Außenscheibe 2 ist eine zweite opake Maskierungsschicht 9, 9.2 aufgebracht. Die erste und die zweite Maskierungsschicht 9.1, 9.2 erstrecken sich rahmenförmig entlang der umlaufenden Kante der Verbundscheibe 1. Die zweite Maskierungsschicht 9, 9.2 ist im unteren Randbereich direkt angrenzend zur Unterkante 10.2 der Verbundscheibe 1 im Gegensatz zum oberen Randbereich direkt angrenzend zur Oberkante 10.1 der Verbundscheibe 1 verbreitert aufgebracht. Die erste und die zweite Maskierungsschicht 9.1, 9.2 sind opak und verhindern die Sicht auf innenseitig oder außenseitig der Verbundscheibe 1 angeordnete Strukturen, beispielsweise eine Kleberaupe zum Einkleben der Verbundscheibe 1 in eine Fahrzeugkarosserie. Die erste und die zweite opake Maskierungsschicht 9.1, 9.2 bestehen aus einem herkömmlicherweise für Schwarzdrücke verwendetem, elektrisch nichtleitendem Material, beispielsweise eine schwarz eingefärbte Siebdruckfarbe, die eingebrannt ist.

Auf der außenseitigen Oberfläche III der Innenscheibe 3 ist eine teilweise transparente Reflexionsschicht 5 aufgebracht. Die teilweise transparente Reflexionsschicht 5 erstreckt sich über die gesamte außenseitige Oberfläche III der Innenscheibe 3 mit Ausnahme eines umlaufenden Randbereichs und optional lokaler Bereich, die als Kommunikations-, Sensor- oder Kamerafenster die Transmission von elektromagnetischer Strahlung durch die Verbundscheibe 1 gewährleisten sollen (nicht gezeigt) und daher nicht mit der teilweise transparenten Reflexionsschicht 5 versehen sind. Der umlaufende unbeschichtete Randbereich weist beispielsweise eine Breite von 2 cm auf. Er verhindert den direkten Kontakt der teilweise transparenten Reflexionsschicht 5 zur umgebenden Atmosphäre, so dass die teilweise transparente Reflexionsschicht 5 im Innern der Verbundscheibe 1 vor Korrosion und Beschädigung geschützt ist und die Fahrzeugkarosserie elektrisch von der teilweise transparenten Reflexionsschicht 5 isoliert ist. Die teilweise transparente Reflexionsschicht 5 beispielsweise ein Dünnschichtstapel enthaltend eine Silberschicht mit einer Schichtdicke von 15 nm.

Bereichsweise ist auf der teilweise transparenten Reflexionsschicht 5 eine opake Reflexionsschicht 6 aufgebracht. Diese befindet sich benachbart zur ersten Maskierungsschicht 9, 9,1 im unteren Randbereich der Verbundscheibe 1, ist also näher zur Unterkante 10.2 als zur Oberkante 10.1 der Verbundscheibe 1 angeordnet. Die opake Reflexionsschicht 6 ist in Einbaulage in ein Fahrzeug in der Umgebung zum Armaturenbrett 15 angeordnet. Die opake Reflexionsschicht 6 erstreckt sich also von der linken Seitenkante zur rechten Seitenkante der Verbundscheibe 1, ohne mit dem ersten Maskierungsschicht 9, 9.1 zu überlappen. Die opake Reflexionsschicht 6 weist beispielsweise eine Breite von 30 cm auf. Die opake Reflexionsschicht 6 ist zudem so angeordnet, dass sie in Durchsicht durch die Verbundscheibe 1 vom Innenraum 13 aus gesehen mit dem verbreiterten Abschnitt der zweiten Maskierungsschicht 9, 9.2 vollständig überdeckt. Die opake Reflexionsschicht 6 ist also fahrzeuginnenraumseitig vor der zweiten Maskierungsschicht 9, 9.2 angeordnet. Mit anderen Worten: die zweite Maskierungsschicht 9, 9.2 verdeckt die Reflexionsschicht 6 vollständig bei Durchsicht durch die Verbundscheibe 1 von der äußeren Umgebung 15 aus gesehen. Die opake Reflexionsschicht 6 ist außerhalb eines zur Durchsicht vorgesehenen Durchsichtbereich 7 angeordnet, wohingegen die teilweise transparente Reflexionsschicht 5 sich über den gesamten Durchsichtbereich 7 erstreckt und sich auch darrüberhinaus erstreckt. Die opake Reflexionsschicht 6 ist beispielsweise ein Dünnschicht-Schichtstapel bestehend aus TiO₂-Schichten und SiO₂-Schichten, welche beliebig übereinander angeordnet sind. Die opake Reflexionsschicht 6 und die teilweise transparente Reflexionsschicht 5 sind geeignet ausgebildet, um sichtbares Licht zu reflektieren.

Auf einem Armaturenbrett 15 des Fahrzeugs sind ein Projektor 11 und ein weiterer Projektor 12 angeordnet, welche jeweils ein virtuelles Bild in der Form von sichtbarem Licht 8 auf die opake Reflexionsschicht 6 oder teilweise transparente Reflexionsschicht 5 projizieren. Der Projektor 11 projiziert ein virtuelles Bild in Form von sichtbarem Licht 8 auf die teilweise transparente Reflexionsschicht 5. Der vom Projektor 11 bestrahlte Bereich der teilweise transparenten Reflexionsschicht 5 ist durch einen gestrichelten trapezförmigen Bereich auf der Verbundscheibe 1 in Figur 1 angedeutet. Der weitere Projektor 12 projiziert ein virtuelles Bild in Form von sichtbarem Licht 8 auf die opake Reflexionsschicht 6. Der vom weiteren Projektor 12 bestrahlte Bereich der opaken Reflexionsschicht 6 ist durch einen gestrichelten streifenförmigen Bereich auf der Verbundscheibe 1 in Figur 1 angedeutet. Das sichtbare Licht 8 des Projektors 11 und des weiteren Projektors 12 wird an der teilweise transparenten Reflexionsschicht 5 bzw. der opaken Reflexionsschicht 6 reflektiert und das reflektierte Licht 8' wird von einem Betrachter (beispielsweise der Fahrer des Fahrzeugs) visuell wahrgenommen.

Der Projektor 11 bestrahlt einen Bereich der teilweise transparenten Reflexionsschicht 6 im Durchsichtbereich 7 der Verbundscheibe 1, wodurch ein HUD-Bild (Head-Up-Display-Bild) für den Betrachter entsteht. Der weitere Projektor 12 bestrahlt die opake Reflexionsschicht 6 außerhalb des Durchsichtbereiches 7, welche zusätzlich vor einer Maskierungsschicht 9, 9.2 angeordnet ist. Da die Reflexionsschicht 6 opak ist und vor einer opaken Maskierungsschicht 9, 9.2 angeordnet ist, wird das virtuelle Bild mit einem höheren Kontrast visuell wahrnehmbar (Vergleich zu HUD-Bild). Dies ermöglicht es, Projektoren 12 mit einer geringen Lichtstärke also einem geringeren Energieverbrauch einzusetzen. Der Projektor 11 und der weitere Projektor sind beispielsweise Leuchtdioden-Displays (LED-Display).

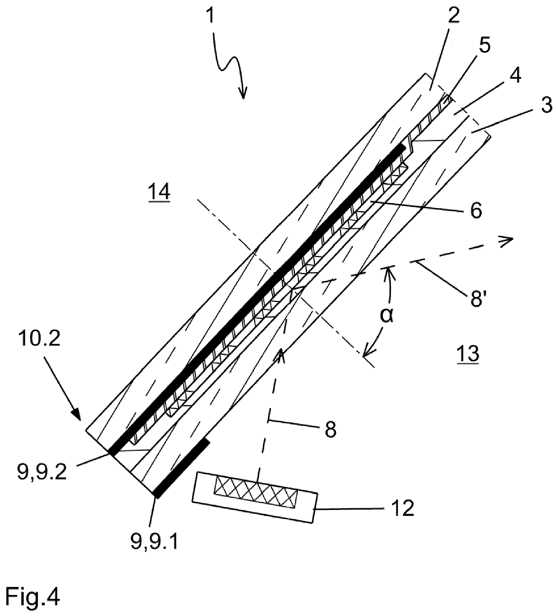

Es wird nun Bezug auf die Figuren 4 bis 7 genommen, worin vergrößerte Querschnittansichten verschiedener Ausgestaltungen der Verbundscheibe 1 gezeigt sind. Die Querschnittansichten der Figuren 4 bis 7 entsprechen der Schnittlinie A-A' im unteren Randbereich angrenzend zur Unterkante 10.2 der Verbundscheibe 1, wie in Figur 1 und Figur 2 angedeutet ist. Die in den Figuren 4 bis 7 gezeigten Varianten entsprechen im Wesentlichen der Variante aus den Figuren 1, 2 und 3, sodass hier nur auf die Unterschiede eingegangen wird und ansonsten auf die Beschreibung zu den Figuren 1, 2 und 3 verwiesen wird.

Anders als die Variante aus den Figuren 1, 2 und 3 ist die teilweise transparente Reflexionsschicht 5 in Figur 4 nicht auf der außenseitigen Oberfläche III der Innenscheibe 3, sondern auf der innenraumseitigen Oberfläche II der Außenscheibe 2 sowie der zweiten Maskierungsschicht 9, 9.2 aufgebracht. Die opake Reflexionsschicht 6 ist bereichsweise auf der teilweise transparenten Reflexionsschicht 5 aufgebracht wie für die Figuren 1, 2 und 3 beschrieben.

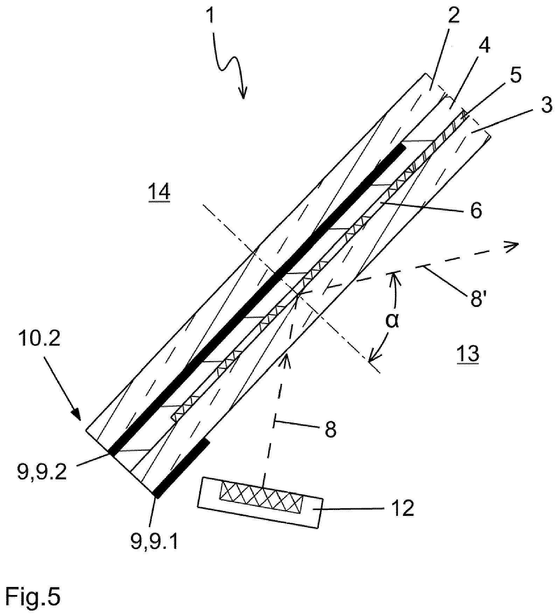

Die Figur 5 zeigt eine Ausgestaltung der Erfindung, bei der die teilweise transparente Reflexionsschicht sich nicht über den zur Unterkante 10.2 benachbarten Randbereich der Verbundscheibe erstreckt. Die opake Reflexionsschicht 6 ist im zur Unterkante 10.2 benachbarten Randbereich der Verbundscheibe 1 angeordnet und überlappt in Durchsicht durch die Verbundscheibe 1 nicht mit der teilweise transparenten Reflexionsschicht 5. Die opake Reflexionsschicht 6 ist auf der außenseitigen Oberfläche III der Innenscheibe 3 aufgebracht. Dadurch, dass die teilweise transparente Reflexionsschicht 5 und die opake Reflexionsschicht 6 nicht miteinander überlappen, können visuelle Farbeffekte, welche durch Interferenzen des reflektierten Lichtes 8' entstehen können, vermieden werden.

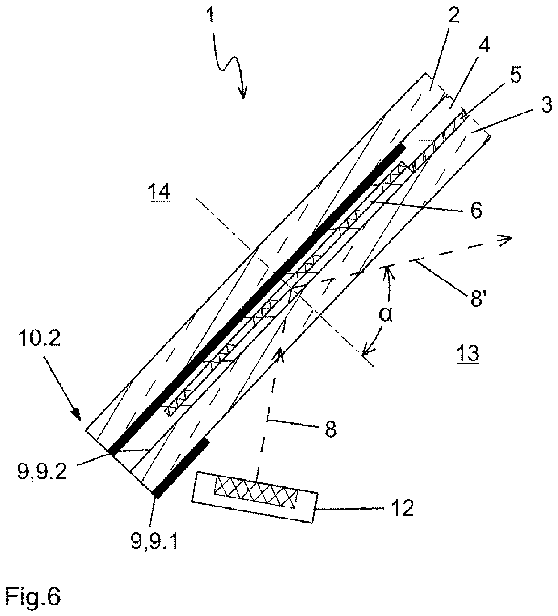

In der in Figur 6 gezeigten Ausgestaltung der Erfindung ist die opake Reflexionsschicht 6 statt einer Beschichtung, welche auf der teilweise transparenten Reflexionsschicht 5 aufgebracht ist, eine beschichtete, reflektierende Folie. Die Folie ist beispielsweise auf Basis von PET ausgebildet und mit einem Dünnschicht-Schichtstapel, bestehend aus TiO₂-Schichten und SiO₂-Schichten, beschichtet. Die opake Reflexionsschicht 6 ist innerhalb der thermoplastischen Zwischenschicht 4 angeordnet. Die opake Reflexionsschicht 6 wird beispielsweise vor dem Laminierungsprozess zwischen zwei thermoplastischen Verbundfolien angeordnet. Um Dickenunterschiede auszugleichen, können die thermoplastischen Verbundfolien im mit der opaken Reflexionsschicht 6 deckenden Bereich dünner ausgebildet sein als in den übrigen Bereichen. Die teilweise transparente Reflexionsschicht 6 ist wie für Figur 5 beschrieben und gezeigt angeordnet.

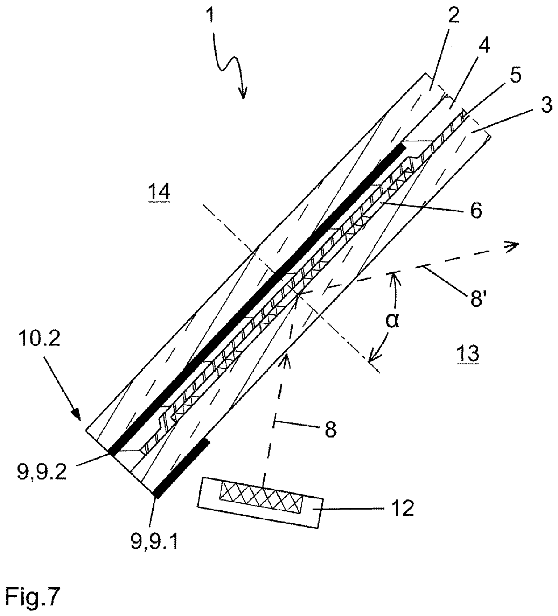

Die Figur 7 zeigt eine Ausgestaltung, in der die opake Reflexionsschicht 6 auf der außenseitigen Oberfläche III der Innenscheibe 3 aufgebracht ist und die teileweise transparente Reflexionsschicht 5 im mit der opaken Reflexionsschicht 6 überlappenden Bereich auf der opaken Reflexionsschicht 6 aufgebracht ist. Im nicht mit der opaken Reflexionsschicht 6 überlappenden Bereich ist die teilweise transparente Reflexionsschicht 5 auf der außenseitigen Oberfläche III der Innenscheibe 3 aufgebracht. Hierdurch werden die Reflexionseigenschaften der opaken Reflexionsschicht 6 weniger stark herabgesetzt, da das von der opaken Reflexionsschicht 6 reflektierte Licht 8' nicht durch die teilweise transparente Reflexionsschicht 5 transmittieren muss.

### Bezugszeichen

- 1: Verbundscheibe
- 2: Außenscheibe
- 3: Innenscheibe
- 4: thermoplastische Zwischenschicht
- 5: teilweise transparente Reflexionsschicht
- 6: opake Reflexionsschicht
- 7: Durchsichtbereich
- 8: sichtbares Licht
- 8': reflektiertes Licht
- 9: opake Maskierungsschicht
- 9.1 9.2: erste Maskierungsschicht zweite Maskierungsschicht
- 10.1: Oberkante der Verbundscheibe 1
- 10.2: Unterkante der Verbundscheibe 1
- 11: Projektor
- 12: weiterer Projektor
- 13: Innenraum
- 14: äußere Umgebung
- 15: Armaturenbrett

- 100: Projektionsanordnung

- I: außenseitige Oberfläche der Außenscheibe 2
- II: innenraumseitige Oberfläche der Außenscheibe 2
- III: außenseitige Oberfläche der Innenscheibe 3
- IV: innenraumseitige Oberfläche der Innenscheibe 3

- A-A': Schnittlinie

## Patentansprüche

1. Verbundscheibe (1) für eine Projektionsanordnung (100), umfassend:
- eine Außenscheibe (2), eine thermoplastische Zwischenschicht (4) und eine Innenscheibe (3),
- eine teilweise transparente Reflexionsschicht (5) mit einem Lichttransmissionsgrad nach ISO9050:2003 von mindestens 50% und höchstens 90% und
- eine opake Reflexionsschicht (6) mit einem Lichttransmissionsgrad nach ISO9050:2003 von weniger als 30%,
wobei die teilweise transparente Reflexionsschicht (5) und die opake Reflexionsschicht (6) zwischen der Außenscheibe (2) und der Innenscheibe (3) angeordnet sind,
wobei die opake Reflexionsschicht (6) außerhalb eines Durchsichtbereich (7) der Verbundscheibe (1) angeordnet ist und die teilweise transparente Reflexionsschicht (5) sich über mindestens den gesamten Durchsichtbereich (7) der Verbundscheibe (1) erstreckt,
wobei die opake Reflexionsschicht (6) sichtbares Licht (8) zu mindestens 30 % reflektiert und die teilweise transparente Reflexionsschicht (5) sichtbares Licht (8) zu maximal 30 % reflektiert, bestimmt als gemittelter Reflexionsgrad im Wellenlängenbereich von 380 nm bis 780 nm, gemessen unter einem Winkel von 65° zur Flächennormalen der von der Zwischenschicht (4) abgewandten Oberfläche (IV) der Innenscheibe (3).

2. Verbundscheibe (1) nach Anspruch 1, wobei die opake Reflexionsschicht (6) in Durchsicht durch die Verbundscheibe (1) vor einer Maskierungsschicht (9) angeordnet ist.

3. Verbundscheibe (1) nach Anspruch 1 oder 2, wobei sich die teilweise transparente Reflexionsschicht (5) über mindestens 90 % der Fläche der Verbundscheibe (1) erstreckt.

4. Verbundscheibe (1) nach einem der Ansprüche 1 bis 3, wobei die opake Reflexionsschicht (6) in einem oberen oder unteren Randbereich benachbart zur Oberkante (10.1) oder Unterkante (10.2) der Verbundscheibe (1) angeordnet ist.

5. Verbundscheibe (1) nach einem der Ansprüche 1 bis 4, wobei die teilweise transparente Reflexionsschicht (5) höchstens 2, bevorzugt höchstens 1, Silberschicht enthält oder daraus besteht.

6. Verbundscheibe (1) nach einem der Ansprüche 1 bis 5, wobei die teilweise transparente Reflexionsschicht (5) eine Schichtdicke von 1 nm bis 100 nm, bevorzugt 10 nm bis 50 nm aufweist.

7. Verbundscheibe (1) nach einem der Ansprüche 1 bis 6, wobei die opake Reflexionsschicht (6) sichtbares Licht (8) zu mindestens 40 %, bevorzugt zu mindestens 70 % reflektiert.

8. Verbundscheibe (1) nach einem der Ansprüche 1 bis 7, wobei die teilweise transparente Reflexionsschicht (5) sichtbares Licht (8) zu mindestens 10 %, bevorzugt zu mindestens 15 % reflektiert.

9. Verbundscheibe (1) nach einem der Ansprüche 1 bis 8, wobei die opake Reflexionsschicht (6) Silizium, Aluminium, Zirkonium, Nickel, Chrom, mit Bor dotiertes Silizium, Silizium-Zirconium-Mischnitrid, Siliziumnitrid, Titanoxid, Siliziumoxid, Titancarbid, Zirconiumcarbid, Silizium-Zirconium-Aluminium und/oder Mischungen davon enthält.

10. Verbundscheibe (1) nach einem der Ansprüche 1 bis 9, wobei die opake Reflexionsschicht (6) auf einer der thermoplastischen Zwischenschicht (4) zugewandten außenseitigen Oberfläche (III) der Innenscheibe (3) aufgebracht ist.

11. Verbundscheibe (1) nach einem der Ansprüche 1 bis 9, wobei die opake Reflexionsschicht (6) auf einem Bereich der teilweise transparenten Reflexionsschicht (5) aufgebracht ist.

12. Verbundscheibe (1) nach einem der Ansprüche 1 bis 11, wobei die teilweise transparente Reflexionsschicht (5) auf einer der thermoplastischen Zwischenschicht (4) zugewandten außenseitigen Oberfläche (III) der Innenscheibe (3) aufgebracht ist.

13. Projektionsanordnung (100), umfassend
- eine Verbundscheibe (1) nach einer der Ansprüche 1 bis 12,
- einen Projektor (11), welcher ein Bild auf die teilweise transparente Reflexionsschicht (5) projiziert und
- einen weiteren Projektor (12), welcher ein Bild auf die opake Reflexionsschicht (6) projiziert.

14. Verfahren zur Herstellung einer Verbundscheibe (1) nach einem der Ansprüche 1 bis 12, wobei
(A) ein Schichtstapel aus der Außenscheibe (2), der thermoplastischen Zwischenschicht (4) und der Innenscheibe (3) bereitgestellt wird,
(B) die teilweise transparente Reflexionsschicht (5) und die opake Reflexionsschicht (6) zwischen die Außenscheibe (2) und die Innenscheibe (3) angeordnet werden und
(C) der Schichtstapel zu der Verbundscheibe (1) laminiert wird.

15. Verwendung einer Verbundscheibe (1) nach einem der Ansprüche 1 bis 12 in Fortbewegungsmitteln für den Verkehr auf dem Lande, in der Luft oder zu Wasser, bevorzugt in Kraftfahrzeugen beispielsweise als Windschutzscheibe, Heckscheibe, Seitenscheiben und/oder Glasdach, besonders bevorzugt als Dachscheibe oder als funktionales und/oder dekoratives Einzelstück und als Einbauteil in Möbeln, Geräten und Gebäuden.

## Claims

1. Laminated pane (1) for a projection arrangement (100), comprising:
- an outer pane (2), a thermoplastic intermediate layer (4), and an inner pane (3),
- a partially transparent reflective layer (5) having a light transmittance according to IS09050:2003 of at least 50% and at most 90%, and
- an opaque reflective layer (6) having a light transmittance according to ISO9050:2003 of less than 30%,
wherein the partially transparent reflective layer (5) and the opaque reflective layer (6) are arranged between the outer pane (2) and the inner pane (3),
wherein the opaque reflective layer (6) is arranged outside a see-through region (7) of the laminated pane (1) and the partially transparent reflective layer (5) extends over at least the entire see-through region (7) of the laminated pane (1),
wherein the opaque reflective layer (6) reflects at least 30% of visible light (8) and the partially transparent reflective layer (5) reflects at most 30% of visible light (8), determined as an average reflectance in the wavelength range of from 380 nm to 780 nm, measured at an angle of 65° to the surface normal of the surface (IV) of the inner pane (3) facing away from the intermediate layer (4).

2. Laminated pane (1) according to claim 1, wherein the opaque reflective layer (6) is arranged in front of a masking layer (9) when viewed through the laminated pane (1).

3. Laminated pane (1) according to claim 1 or claim 2, wherein the partially transparent reflective layer (5) extends over at least 90% of the surface of the laminated pane (1).

4. Laminated pane (1) according to any of claims 1 to 3, wherein the opaque reflective layer (6) is arranged in an upper or lower edge region neighbouring the upper edge (10.1) or lower edge (10.2) of the laminated pane (1).

5. Laminated pane (1) according to any of claims 1 to 4, wherein the partially transparent reflective layer (5) contains or consists of at most 2, preferably at most 1, silver layer(s).

6. Laminated pane (1) according to any of claims 1 to 5, wherein the partially transparent reflective layer (5) has a layer thickness of from 1 nm to 100 nm, preferably 10 nm to 50 nm.

7. Laminated pane (1) according to any of claims 1 to 6, wherein the opaque reflective layer (6) reflects at least 40%, preferably at least 70%, of visible light (8).

8. Laminated pane (1) according to any of claims 1 to 7, wherein the partially transparent reflective layer (5) reflects at least 10%, preferably at least 15%, of visible light (8).

9. Laminated pane (1) according to any of claims 1 to 8, wherein the opaque reflective layer (6) contains silicon, aluminium, zirconium, nickel, chromium, boron-doped silicon, silicon-zirconium mixed nitride, silicon nitride, titanium oxide, silicon oxide, titanium carbide, zirconium carbide, silicon-zirconium-aluminium, and/or mixtures thereof.

10. Laminated pane (1) according to any of claims 1 to 9, wherein the opaque reflective layer (6) is applied to an outer surface (III) of the inner pane (3) facing the thermoplastic intermediate layer (4).

11. Laminated pane (1) according to any of claims 1 to 9, wherein the opaque reflective layer (6) is applied to a region of the partially transparent reflective layer (5).

12. Laminated pane (1) according to any of claims 1 to 11, wherein the partially transparent reflective layer (5) is applied to an outer surface (III) of the inner pane (3) facing the thermoplastic intermediate layer (4).

13. Projection arrangement (100) comprising
- a laminated pane (1) according to any of claims 1 to 12,
- a projector (11) which projects an image onto the partially transparent reflective layer (5), and
- a further projector (12) which projects an image onto the opaque reflective layer (6).

14. Method for producing a laminated pane (1) according to any of claims 1 to 12, wherein
(A) a layer stack consisting of the outer pane (2), the thermoplastic intermediate layer (4), and the inner pane (3) is provided,
(B) the partially transparent reflective layer (5) and the opaque reflective layer (6) are arranged between the outer pane (2) and the inner pane (3), and
(C) the layer stack is laminated to form the laminated pane (1).

15. Use of a laminated pane (1) according to any of claims 1 to 12 in means of transport for traffic on land, in the air, or in water, preferably in motor vehicles, for example as a windshield, a rear window, side windows, and/or a glass roof, particularly preferably as a roof pane, or as a functional and/or decorative individual piece and as a built-in part in furniture, devices, and buildings.

## Revendications

1. Vitrage feuilleté (1) pour un agencement de projection (100), comprenant :
- une vitre extérieure (2), une couche intermédiaire (4) thermoplastique et une vitre intérieure (3),
- une couche réfléchissante partiellement transparente (5) comportant un facteur de transmission lumineuse selon la norme ISO9050:2003 d'au moins 50 % et d'au plus 90 % et
- une couche réfléchissante opaque (6) comportant un facteur de transmission lumineuse selon la norme ISO9050:2003 inférieur à 30 %,
dans lequel la couche réfléchissante partiellement transparente (5) et la couche réfléchissante opaque (6) sont disposées entre la vitre extérieure (2) et la vitre intérieure (3),
dans lequel la couche réfléchissante opaque (6) est disposée à l'extérieur d'une zone de transparence (7) du vitrage feuilleté (1) et la couche réfléchissante partiellement transparente (5) s'étend sur au moins toute la zone de transparence (7) du vitrage feuilleté (1),
dans lequel la couche réfléchissante opaque (6) réfléchit la lumière visible (8) à raison d'au moins 30 % et la couche réfléchissante partiellement transparente (5) réfléchit la lumière visible (8) à raison d'au plus 30 %, déterminées en tant que degré de réflexion moyen dans la gamme de longueurs d'onde allant de 380 nm à 780 nm, mesuré selon un angle de 65° par rapport à la normale à la surface de la surface (IV) de la vitre intérieure (3) opposée à la couche intermédiaire (4).

2. Vitrage feuilleté (1) selon la revendication 1, dans lequel la couche réfléchissante opaque (6) est disposée en transparence à travers le vitrage feuilleté (1) avant une couche de masquage (9).

3. Vitrage feuilleté (1) selon la revendication 1 ou 2, dans lequel la couche réfléchissante partiellement transparente (5) s'étend sur au moins 90 % de la surface du vitrage feuilleté (1).

4. Vitrage feuilleté (1) selon l'une des revendications 1 à 3, dans lequel la couche réfléchissante opaque (6) est disposée dans une zone marginale supérieure ou inférieure adjacente au bord supérieur (10.1) ou au bord inférieur (10.2) du vitrage feuilleté (1).

5. Vitrage feuilleté (1) selon l'une des revendications 1 à 4, dans lequel la couche réfléchissante partiellement transparente (5) contient au plus 2, de préférence au plus 1, couches d'argent ou est constituée de celles-ci.

6. Vitrage feuilleté (1) selon l'une des revendications 1 à 5, dans lequel la couche réfléchissante partiellement transparente (5) présente une épaisseur de couche allant de 1 nm à 100 nm, de préférence de 10 nm à 50 nm.

7. Vitrage feuilleté (1) selon l'une des revendications 1 à 6, dans lequel la couche réfléchissante opaque (6) réfléchit la lumière visible (8) à raison d'au moins 40 %, de préférence à raison d'au moins 70 %.

8. Vitrage feuilleté (1) selon l'une des revendications 1 à 7, dans lequel la couche réfléchissante partiellement transparente (5) réfléchit la lumière visible (8) à raison d'au moins 10 %, de préférence à raison d'au moins 15 %.

9. Vitrage feuilleté (1) selon l'une des revendications 1 à 8, dans lequel la couche réfléchissante opaque (6) contient du silicium, de l'aluminium, du zirconium, du nickel, du chrome, du silicium dopé au bore, du nitrure mixte de silicium et de zirconium, du nitrure de silicium, de l'oxyde de titane, de l'oxyde de silicium, du carbure de titane, du carbure de zirconium, du silicium-zirconium-aluminium et/ou leurs mélanges.

10. Vitrage feuilleté (1) selon l'une des revendications 1 à 9, dans lequel la couche réfléchissante opaque (6) est appliquée sur une surface côté extérieur (III) de la vitre intérieure (3) tournée vers la couche intermédiaire (4) thermoplastique.

11. Vitrage feuilleté (1) selon l'une des revendications 1 à 9, dans lequel la couche réfléchissante opaque (6) est appliquée sur une zone de la couche réfléchissante partiellement transparente (5).

12. Vitrage feuilleté (1) selon l'une des revendications 1 à 11, dans lequel la couche réfléchissante partiellement transparente (5) est appliquée sur une surface côté extérieur (III) de la vitre intérieure (3) tournée vers la couche intermédiaire (4) thermoplastique.

13. Agencement de projection (100), comprenant
- un vitrage feuilleté (1) selon l'une des revendications 1 à 12,
- un projecteur (11) qui projette une image sur la couche réfléchissante partiellement transparente (5) et
- un autre projecteur (12) qui projette une image sur la couche réfléchissante opaque (6).

14. Procédé pour la fabrication d'un vitrage feuilleté (1) selon l'une des revendications 1 à 12, dans lequel
(A) un empilement de couches constitué de la vitre extérieure (2), de la couche intermédiaire (4) thermoplastique et de la vitre intérieure (3) est fourni,
(B) la couche réfléchissante partiellement transparente (5) et la couche réfléchissante opaque (6) sont disposées entre la vitre extérieure (2) et la vitre intérieure (3) et
(C) l'empilement de couches est stratifié pour former le vitrage feuilleté (1).

15. Utilisation d'un vitrage feuilleté (1) selon l'une des revendications 1 à 12 dans des moyens de locomotion pour la circulation terrestre, aérienne ou maritime, de préférence dans des véhicules automobiles, par exemple en tant que pare-brise, lunette arrière, vitre latérale et/ou toit en verre, de manière particulièrement préférée en tant que vitre de toit ou en tant que pièce unique fonctionnelle et/ou décorative et en tant qu'élément incorporé dans des meubles, appareils et bâtiments.
